(19) **Europäisches Patentamt European Patent Office Office européen des brevets**

(11) **EP 4 569 309 B1**

(12) **FASCICULE DE BREVET EUROPEEN**

(45) Date de publication et mention
de la délivrance du brevet:
**17.06.2026   Bulletin 2026/25**

(21) Numéro de dépôt: **23751997.0**

(22) Date de dépôt: **10.08.2023**

(51) Classification Internationale des Brevets (IPC):
**G01N 11/10** (2006.01)

(52) Classification Coopérative des Brevets (CPC):
**G01N 11/10;** G01N 2203/0019; G01N 2203/0094

(86) Numéro de dépôt international:
**PCT/EP2023/072214**

(87) Numéro de publication internationale:
**WO 2024/033495 (15.02.2024 Gazette 2024/07)**

(54) **PROCÉDÉ D'ÉVALUATION D'UN GEL DE COMBLEMENT**

**VERFAHREN ZUR BEWERTUNG EINES FÜLLSTOFFGELS**

**METHOD FOR EVALUATING A FILLER GEL**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:   **10.08.2022   FR 2208223**

(43) Date de publication de la demande:
**18.06.2025   Bulletin 2025/25**

(73) Titulaire: **Teoxane SA
1203 Genève (CH)**

(72) Inventeurs:
• **FAIVRE, Jimmy
1203 Genève (CH)**
• **BOURDON, François
1203 Genève (CH)**

(74) Mandataire: **Ipsilon
12 Avenue d'Italie
75013 Paris (FR)**

(56) Documents cités:
**WO-A1-2022/074259**

• **FAIVRE JIMMY ET AL: "Advanced Concepts in Rheology for the Evaluation of Hyaluronic Acid-Based Soft Tissue Fillers", DERMATOLOGIC SURGERY., vol. 47, no. 5, 22 February 2021 (2021-02-22), NEW YORK, US, pages e159 - e167, XP055973530, ISSN: 1076-0512, DOI: 10.1097/ DSS.0000000000002916**
• **FAIVRE JIMMY ET AL: "Original Article - Supplemental Digital Content Advanced Concepts in Rheology for the Evaluation of Hyaluronic Acid-based Soft Tissue Fillers", 1 May 2021 (2021-05-01), pages 1 - 5, XP093029041, Retrieved from the Internet <URL:https://links. lww.com/DSS/A642> [retrieved on 20230306]**
• **BRUSINI ROMAIN ET AL: "Comparative Preclinical Study of Lidocaine and Mepivacaine in Resilient Hyaluronic Acid Fillers", PHARMACEUTICS, vol. 14, no. 8, 26 July 2022 (2022-07-26), pages 1553, XP093028795, DOI: 10.3390/pharmaceutics14081553**
• **SUNDARAM HEMA ET AL: "Cohesivity of Hyaluronic Acid Fillers : Development and Clinical Implications of a Novel Assay, Pilot Validation with a Five-Point Grading Scale, and Evaluation of Six U.S. Food and Drug Administration-Approved Fillers", PLASTIC AND RECONSTRUCTIVE SURGERY, vol. 136, no. 4, 1 October 2015 (2015-10-01), US, pages 678 - 686, XP093029026, ISSN: 0032-1052, DOI: 10.1097/ PRS.0000000000001638**

EP 4 569 309 B1

- **GAVARD MOLLIARD SAMUEL ET AL: "Key importance of compression properties in the biophysical characteristics of hyaluronic acid soft-tissue fillers", JOURNAL OF THE MECHANICAL BEHAVIOR OF BIOMEDICAL MATERIALS, ELSEVIER, AMSTERDAM, NL, vol. 61, 8 April 2016 (2016-04-08), pages 290 - 298, XP029617785, ISSN: 1751-6161, DOI: 10.1016/ J.JMBBM.2016.04.001**

**Description**

**Domaine technique**

La présente invention concerne les gels de comblement (« filler gels » en anglais), notamment à base de polysaccharide, utilisés dans le domaine esthétique et/ou médical pour combler les rides et/ou donner plus de relief à certaines zones du visage.

**Technique antérieure**

Les gels de comblement sont par exemple des hydrogels à base de polysaccharide, notamment d'acide hyaluronique (HA) et sont injectés sous la peau à l'aide d'une seringue.

Les fabricants proposent des gels de comblement présentant diverses propriétés rhéologiques en fonction du site d'injection du gel ; par exemple, en cas d'injection dans les couches superficielles de la peau, les gels doivent combler légèrement les fines rides et ridules et être capables de suivre facilement les mouvements du visage. Tandis que les gels destinés au comblement des plis et rides plus sévères et/ou à la création de volume dits produits « volumateurs », doivent avoir une capacité à maintenir durablement leur épaisseur dans les couches de la peau, y compris sous la contrainte des mouvements du visage.

La rhéologie du gel et son comportement dans le temps sont donc des éléments essentiels qu'il convient de maîtriser si l'on cherche à obtenir des gels de comblement aux résultats optimaux.

Les mesures rhéologiques des gels habituellement les plus exploitées sont celles des modules G' et G", l'angle de déphasage $\delta$ étant relié à ces mesures (tan $\delta$ = G"/G'). Ces mesures sont communément effectuées sous un faible stress oscillatoire avec une faible amplitude, dans leur zone de viscoélasticité linéaire. Ces mesures ne reflètent pas toutes le stress mécanique et de déformation qu'un gel de comblement subit *in vivo.*

Ces mesures ne permettent pas de prédire le comportement en compression du gel. Or, dans le cas d'une implantation profonde, le gel se trouve comprimé entre des couches de tissus et son aptitude à créer du relief dépend de sa capacité à ne pas s'étaler ou perdre son épaisseur outre mesure au cours du temps.

De manière à caractériser le comportement du gel en compression, il est connu de mesurer sa cohésivité (« cohesivity » en anglais) en effectuant un test de compression consistant à soumettre un bolus de gel à la pression d'une plaque animée d'un mouvement d'avance constant et à mesurer la force de réaction du gel en fin d'avance.

Jimmy Faivre et al.: "Advanced Concepts in Rheology for the Evaluation of Hyaluronic Acid-Based Soft Tissue Fillers", DERMATOLOGIC SURGERY, vol. 47, no. 5, 22 février 2021, pages e159-e167 et "Original Article - Supplemental Digital Content Advanced Concepts in Rheology for the Evaluation of Hyaluronic Acid-based Soft Tissue Fillers", pages 1-5, divulguent un procédé d'évaluation des performances mécaniques d'un gel de comblement connu.

Toutefois, ce test ne permet pas de prédire d'une manière totalement fiable le comportement du gel dans les tissus.

Il demeure par ailleurs un intérêt pour disposer d'outils de caractérisation et de sélection de gels au laboratoire, permettant de limiter le recours à des tests *in vivo* au stade du développement d'un produit.

**Exposé de l'invention**

Il existe par conséquent un besoin pour faciliter l'évaluation, la caractérisation et l'élaboration d'un nouveau gel de comblement et notamment pouvoir facilement discriminer plusieurs gels pour retenir celui ou ceux ayant les propriétés les plus intéressantes vis-à-vis du résultat recherché, et notamment, pour les produits volumateurs, d'évaluer *in vitro* leur capacité à maintenir leur épaisseur dans les tissus. Des tests *in vivo* sont également connus mais sont longs et coûteux et nécessitent de sacrifier des animaux.

L'invention offre une méthode de caractérisation directe du comportement d'un gel lorsqu'il est soumis à une contrainte prédéfinie *in vitro.* Une telle méthode permet de mesurer la capacité du gel à maintenir son épaisseur initiale sous une contrainte normale fixe constante et donc de prendre en compte les forces appliquées par les tissus environnants sur un gel dans ou sous la peau, par exemple liées aux mouvements du visage.

Au sens de la présente invention le terme « peau » englobe la peau du visage, du décolleté, des mains, du cuir chevelu, de l'abdomen et/ou des jambes mais également les lèvres.

**Résumé de l'invention**

L'invention atteint cet objectif grâce à un procédé d'évaluation des performances mécaniques d'un gel de comblement, comportant les étapes consistant à :

- 1) soumettre un bolus de ce gel, présent avec une épaisseur initiale $d_0$ prédéfinie entre deux surfaces de pression, à une force de compression prédéfinie F,
- 2) acquérir l'évolution de la variation de l'épaisseur du gel ainsi comprimé au cours du temps,
- 3) paramétrer un modèle mathématique approximant l'évolution observée à partir de l'acquisition effectuée,
- 4) déterminer à partir du modèle une épaisseur limite $d_\infty$ vers laquelle tend à évoluer le gel au cours du temps,
- 5) générer une information relative à la capacité du gel à maintenir son épaisseur dans les tissus, notamment un indice de projection, en comparant l'épaisseur limite $d_\infty$ à l'épaisseur initiale $d_0$.

Grâce à l'invention on dispose d'une information représentative du comportement réel d'un bolus de gel soumis à une force de compression au sein des tissus ; plus la capacité à maintenir son épaisseur est élevée, plus l'épaisseur limite sera proche de l'épaisseur initiale. Par rapport à un test de compression, le procédé selon l'invention repose sur une sollicitation mécanique du gel plus fidèle à ce qu'il peut subir *in vivo*.

Le procédé selon l'invention présente l'avantage d'être rapide, reproductible et de nécessiter peu de quantité de gel pour effectuer la mesure. En effet, une petite quantité de gel, par exemple 1 gramme ou moins, suffit pour obtenir un résultat avec cette méthode alors que les méthodes de caractérisation par compression de l'art antérieur en nécessitaient des quantités plus importantes.

Dans la suite, le terme « application profonde » désigne l'administration d'un gel dans les couches les plus profondes de la peau, l'hypoderme et la partie la plus profonde du derme, et/ou sous la peau (au-dessus du périoste) pour « volumiser » les tissus mous, tels que pour le comblement des rides les plus profondes et/ou des régions partiellement atrophiées du contour du visage et/ou du corps.

Le terme « application superficielle » désigne l'administration, par exemple par mésothérapie, d'une composition superficiellement dans la peau, ou sur la peau, pour le traitement des couches superficielles de la peau, de l'épiderme et des parties les plus superficielles du derme, pour réduire les rides superficielles et/ou améliorer la qualité de la peau (telle que son éclat, sa densité ou sa structure) et/ou rajeunir la peau.

Le terme « application médiane » fait référence à l'administration d'une composition dans la partie médiane de la peau pour traiter les couches médianes de la peau, ainsi que pour réduire les rides médianes. Pour de telles applications intermédiaires, on choisit des gels ayant des propriétés intermédiaires, c'est-à-dire des propriétés entre des propriétés de gels destinés à des applications profondes et des propriétés de gels destinés à des applications superficielles. De tels gels sont parfois appelées « charges utilitaires » ou « charges mi-plan ».

Le « degré de modification » (MoD%) d'un polysaccharide, tel que l'acide hyaluronique, correspond à la quantité molaire d'agent réticulant, telle que la quantité d'agent réticulant liée au polysaccharide, par une ou plusieurs de ses extrémités, exprimée pour 100 moles d'unités de répétition du polysaccharide. Il peut être déterminé par des méthodes connues de l'homme du métier telle que la spectroscopie de Résonance Magnétique Nucléaire (RMN).

Le « taux de réticulation molaire » (TR), exprimé en %, désigne le rapport molaire de la quantité d'agent réticulant par rapport à la quantité d'unité de répétition du polysaccharide introduite dans le milieu réactionnel de réticulation exprimé pour 100 moles d'unités de répétition du polysaccharide dans le milieu de réticulation.

Selon l'invention, le polysaccharide peut être tout polymère composé de monosaccharides joints entre eux par des liaisons glycosidiques. De préférence, le polysaccharide est choisi parmi la pectine et les substances pectiques ; le chitosan ; la chitine ; la cellulose et ses dérivés ; l'agarose ; les glycosaminoglycanes tels que l'acide hyaluronique, l'héparosane, le dermatane sulfate, le kératane sulfate, la chondroïtine et la chondroïtine sulfate ; et leurs mélanges.

De préférence, le polysaccharide est l'acide hyaluronique, en particulier sous forme de sel, en particulier sous forme de sel physiologiquement acceptable tel que le sel de sodium, le sel de potassium, le sel de zinc, le sel de calcium, le sel de magnésium, le sel d'argent, le sel de calcium et les mélanges de ceux-ci. Plus particulièrement, l'acide hyaluronique est sous sa forme acide ou sous forme de sel de sodium (NaHA). Le gel de comblement peut ainsi être un gel à base d'acide hyaluronique et/ou de ses sels.

L'angle de phase $\delta$ caractérise le degré de viscoélasticité d'un matériau, il varie de 0° pour un matériau 100% élastique (toute l'énergie de déformation est restituée par le matériau, ce qui signifie que le gel est capable de regagner sa forme initiale après l'application d'une déformation donnée) à 90° pour un matériau 100% visqueux (toute l'énergie de déformation est perdue par le matériau, ce qui signifie qu'il s'écoule et perd totalement sa forme initiale lorsqu'il subit une déformation).

Le caractère « projetant » ou la capacité de « projeter » d'un gel est défini par le fait de conserver son épaisseur au cours du temps, y compris sous une contrainte.

La force prédéfinie est de préférence constante mais peut aussi varier de manière cyclique dans le temps autour d'une valeur moyenne. La force prédéfinie peut varier de manière cyclique dans le temps autour de 10%, de préférence de 5%, encore de préférence 2% par rapport à la valeur moyenne. Ladite force F peut être appliquée entre une plaque fixe et une plaque mobile qui est déplacée vers la plaque fixe, cette plaque mobile appliquant de préférence une force F fixe.

Le modèle mathématique précité peut être choisi parmi les modèles de Maxwell, de Kelvin, de Kelvin-Voigt et de Burgers.

Le modèle mathématique est de préférence le modèle de Maxwell généralisé pour les matériaux viscoélastiques, qui exprime l'épaisseur de gel en fonction du temps sous la forme :

$$\mathrm{d_{gel}(t)} = d_\infty + \sum \mathrm{A_i.e^{(-t/\tau_i)}}$$

où $d_\infty$ est l'épaisseur limite obtenue à l'équilibre (au bout d'un temps infini pour une force comprise dans le domaine linéaire du gel) ou au bout d'une durée prédéfinie suffisamment grande (pour une force hors du domaine linéaire), $\mathrm{A_i}$ une constante, Ti un paramètre de relaxation, le nombre de membres i de l'équation étant de préférence supérieur à 1 et inférieur ou égal à 3 ; en particulier, de bons résultats sont déjà obtenus pour une valeur de i de 2 dans l'expression ci-dessus, c'est-à-dire pour un modèle exprimé sous la forme :

$$\mathrm{d_{gel}(t)} = d_\infty + \mathrm{A_1.e^{(-t/\tau_1)}} + \mathrm{A_2.e^{(-t/\tau_2)}}$$

Un paramètre dit indice de projection $\mathrm{P_{Idx}}$, exprimé en %, peut être défini par le ratio

$$d_\infty/\mathrm{d_0} * 100.$$

L'étape de génération de l'information relative à la capacité du gel à conserver son épaisseur peut comporter le calcul de l'indice de projection $\mathrm{P_{Idx}}$.

L'épaisseur initiale $\mathrm{d_0}$ peut être choisie entre 100 et 3000 microns, de préférence entre 200 et 2000 microns, de préférence entre 500 et 1000 microns, de préférence entre 600 et 900 microns, mieux entre 600 et 800 microns, étant par exemple égale à 700 microns.

La force F peut être choisie entre 0,1 et 10N, de préférence entre 1 et 5N, de préférence entre 1 et 3N, mieux entre 1,5 et 2,5 N, étant par exemple égale à 2N. Une telle valeur de force est particulièrement bien adaptée aux gels de comblement dits volumateurs et/ou pour application profonde.

L'invention permet avantageusement de mimer différentes conditions d'implantation et donc de prédire le comportement d'un gel dans différentes configurations d'implantation en faisant varier la force appliquée. Dans ce sens, par exemple, pour un gel volumateur, il est possible d'augmenter la force de compression F pour représenter une injection dans une zone dans le derme et/ou sous le derme pouvant résulter en des pressions plus élevées.

Selon l'invention, lorsque les gels sont destinés à une application profonde, on choisira de préférence une force F comprise entre 0,1 et 10N, de préférence entre 1 et 5N, de manière plus préférée entre 2 et 4N.

Selon l'invention, lorsque les gels sont destinés à une application superficielle, on choisira de préférence une force F comprise entre 0,1 et 5N, de préférence entre 0,5 et 2N, de manière plus préférée entre 0,5 et 1N.

Selon l'invention, lorsque les gels sont destinés à une application médiane, on choisira de préférence une force F comprise entre 0,1 et 10N, de préférence entre 1 et 4N, de manière plus préférée entre 1 et 2N.

Ainsi, lors de la mise en œuvre du procédé, on peut effectuer au moins deux évaluations à des forces respectives F différentes selon l'application visée pour les gels, notamment soit à une force F comprise entre 1 et 5N, de préférence entre 2 et 4N, soit à une force F comprise entre 0,5 et 2N, de préférence entre 0,5 et 1N, soit à une force comprise entre 1 et 4N, de préférence entre 1 et 2N.

La quantité de gel peut être choisie entre 0,1 et 10g, de préférence entre 0,5 et 5g, de manière plus préférée entre 0,5 et 2 g, mieux entre 0,75 et 1 g, étant par exemple égale à 1g.

*In vivo,* les tissus environnants se relâchent, les couches cutanées s'étirent, la force normale due aux couches cutanées diminue alors avec le temps. Cela évite un écoulement/aplatissement complet du gel. Tous les gels finissent par atteindre un équilibre.

Avec la méthode *in vitro* selon l'invention, le gel n'est de préférence pas encadré de toutes parts et peut donc s'écouler à terme hors du rhéomètre, en fonction de la géométrie de la cellule de mesure du rhéomètre. La durée d'application de la force est choisie pour tenir compte de cet écoulement et de préférence est inférieure à 10h.

Ainsi, la durée de l'acquisition précitée est de préférence supérieure ou égale à 5 minutes, mieux supérieure ou égale à 30 minutes, mieux supérieure ou égale à 1 heure, notamment comprise entre 30 minutes et 10 heures, notamment comprise entre 30 minutes et 2 heures, par exemple 60 minutes.

Le procédé peut comporter l'étape consistant à déterminer si la compression a lieu dans le domaine de déformation viscoélastique linéaire du gel (Linear ViscoElastic Region ou LVER). Avantageusement, cette étape consiste en une mesure de balayage à déformation oscillatoire en mode compression à une fréquence d'oscillation donnée pour déterminer la région linéaire viscoélastique et encadrer la force normale appliquée. Cette mesure est appliquée sur une gamme de déformation déterminée. De préférence, la gamme de déformation couvre de 0,1 à 10%, à 1Hz à 25°C.

Le procédé peut comporter l'émission d'une information d'alerte lorsque la force F n'est pas dans le domaine de déformation viscoélastique linéaire et/ou que E'<E", E' désignant le module d'élasticité et E" le module de perte.

Le module d'élasticité E', aussi dit module de conservation, correspond à l'énergie restituée par le gel après avoir été soumis à une compression. Cette mesure est exprimée en Pa. Le module de perte E", correspond à l'énergie dissipé par le gel après avoir soumis à une compression. Cette mesure est exprimée en Pa.

Le procédé peut être mis en œuvre à l'aide d'un banc de test comportant un automate disposant d'un processeur programmé pour effectuer le pilotage de la force F et mesurer la distance au cours du temps entre les surfaces d'appui, ainsi que pour paramétrer le modèle, calculer l'épaisseur limite $d_\infty$, et délivrer l'information relative à la capacité du gel à conserver son épaisseur, notamment l'indice de projection $P_{Idx}$.

L'indice de projection ainsi calculé peut être imprimé ou affiché sur un support d'information, notamment une notice, un emballage du gel, un panneau d'information ou publicitaire, une brochure commerciale ou médicale, un écran de télévision, d'ordinateur ou de téléphone portable, ou sur un écran d'automate, par exemple l'automate d'un rhéomètre.

L'invention a encore pour objet un procédé de sélection d'un gel de comblement dans lequel on met en œuvre le procédé d'évaluation selon l'invention pour un ensemble de gels à tester, et l'on sélectionne le gel en fonction au moins du résultat de l'évaluation, notamment de l'indice de projection calculé.

Les gels selon l'invention peuvent être utilisés pour une application profonde ou pour une application superficielle, comme mentionné plus haut.

Parmi un ensemble de gels, les gels ayant le ou les gels ayant le(s) indice(s) de projection le(s) plus élevé(s) peuvent être sélectionné(s). Par exemple, on peut sélectionner les gels dont les indices de projection sont supérieurs ou égaux à 60%, voire 70, 75% ou 85% ou plus.

La valeur d'indice de projection peut être utilisée pour discriminer des gels dont les cohésivités seraient proches, par exemple des gels pour lesquels les mesures de cohésivité diffèrent de moins de 10% (par rapport à la mesure la plus faible), voire moins, par exemple 8% ou moins, 5% ou moins ou 2% ou moins, voire 1% ou moins.

L'invention a encore pour objet un procédé de classement d'un ensemble de gels de comblement en fonction de leur performance mécanique, dans lequel on met pour chacun de ces gels en œuvre le procédé d'évaluation selon l'invention tel que défini plus haut, et l'on classe les gels en fonction des valeurs d'indice de projection obtenues.

L'invention a encore pour objet un procédé de fabrication d'un gel de comblement, dans lequel un gel candidat est fabriqué en une faible quantité, puis son indice de projection est évalué en mettant en œuvre le procédé d'évaluation selon l'invention précité, et l'on fabrique le gel en quantité supérieure à celle du gel candidat, par exemple au moins si l'indice de projection dépasse un seuil prédéfini.

Ce procédé peut comporter la reformulation du gel et la comparaison de l'indice de projection du gel après reformulation, avec celui avant reformulation.

La reformulation peut comporter la modification de la concentration en polysaccharide et/ou de la quantité d'agent réticulant liée au polysaccharide du gel.

Le procédé peut comporter l'étape consistant à déterminer de manière automatique, par itérations, des paramètres du procédé de fabrication du gel de comblement tels que les valeurs de concentration en polysaccharide et de quantité d'agent réticulant permettant d'obtenir les meilleures performances, étant donné la dépendance de l'indice de projection à ces paramètres du procédé de fabrication du gel de comblement.

L'invention a encore pour objet un procédé de fabrication d'un gel de comblement, dans lequel plusieurs gels candidats sont fabriqués en une faible quantité, puis leur indice de projection est évalué en mettant en œuvre le procédé d'évaluation selon l'invention précité, l'on sélectionne un gel sur la base des résultats de l'évaluation, et l'on fabrique le gel sélectionné en quantité supérieure à celle du gel candidat.

L'invention a encore pour objet un procédé d'apprentissage supervisé d'un réseau de neurones, dans lequel on fournit en entrée les valeurs de concentration du polysaccharide, notamment d'acide hyaluronique du gel, le degré de modification MoD%, le taux de réticulation molaire TR, G', G", l'angle de phase $\delta$, et la largeur du domaine linéaire viscoélastique LVER, ainsi que la valeur de l'épaisseur limite $d_\infty$ pour des gels testés, et l'on apprend le réseau à délivrer en sortie la valeur de l'épaisseur limite $d_\infty$ en fonction desdits paramètres d'entrée.

## Brève description des dessins

L'invention pourra être mieux comprise à la lecture de la description détaillée qui va suivre, d'exemples de mise en œuvre non limitatifs de celle-ci, et à l'examen du dessin annexé, sur lequel :

- [Fig 1] la figure 1 est un schéma en blocs d'un exemple de procédé selon l'invention,
- [Fig 2] la figure 2 illustre l'étape d'application d'une force fixe constante à l'échantillon de gel,
- [Fig 3] la figure 3 illustre l'évolution des valeurs dans le temps de l'épaisseur du gel au cours de la mesure pour cinq exemples de gels,
- [Fig 4] la figure 4 représente l'indice de projection tel que déterminé par la mise en œuvre de l'invention pour plusieurs gels de comblement différents, et

- [Fig 5] la figure 5 représente sous forme de diagramme à barres les résultats de mesure de cohésivité et d'indice de projection pour plusieurs gels de comblement.

## Description détaillée

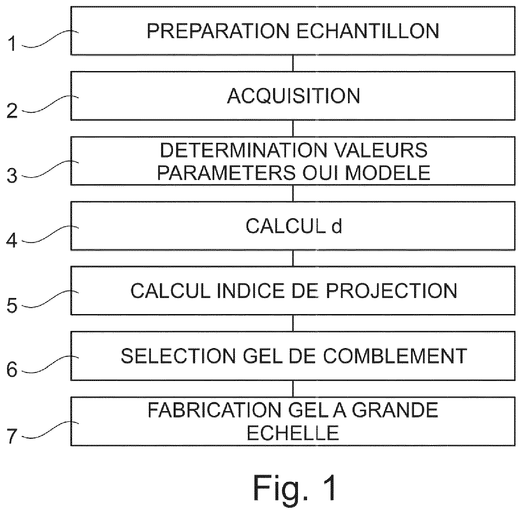

Le procédé selon l'invention peut comporter, comme illustré à la figure 1, une étape 1 de préparation de l'échantillon à tester.

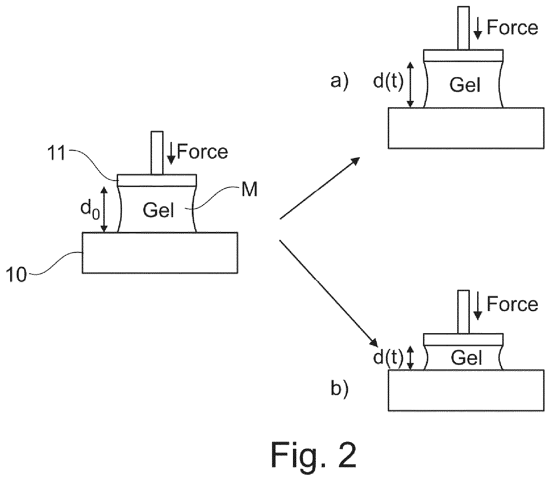

Particulièrement, comme illustré à la figure 2, un bolus d'une masse M du gel de comblement est par exemple déposé sur une plaque de base 10, puis on descend à son contact une plaque de pression 11 qui lui est parallèle et horizontale. Lors de cette étape 1, cette plaque de pression applique une force constante sur l'échantillon, jusqu'à ce que l'épaisseur du matériau, donnée par la distance entre les plaques 10 et 20, soit égale à une valeur prédéfinie $d_0$, par exemple égale à 700 microns.

Une fois que l'épaisseur atteint cette valeur prédéfinie $d_0$ et que la force de résistance du gel est inférieure ou égale à la valeur de la force F à appliquer, on peut commencer l'acquisition en prenant cet instant comme origine des temps de l'acquisition. On peut ensuite mesurer lors de l'étape 2 la poursuite de l'évolution de l'épaisseur en fonction du temps, la pression appliquée par la plaque de pression restant par exemple fixe et constante.

Selon le comportement du gel, l'épaisseur de celui-ci peut n'évoluer que peu au cours de la mesure, comme illustré sous a) à la figure 2, ou de façon plus marquée, comme illustré sous b).

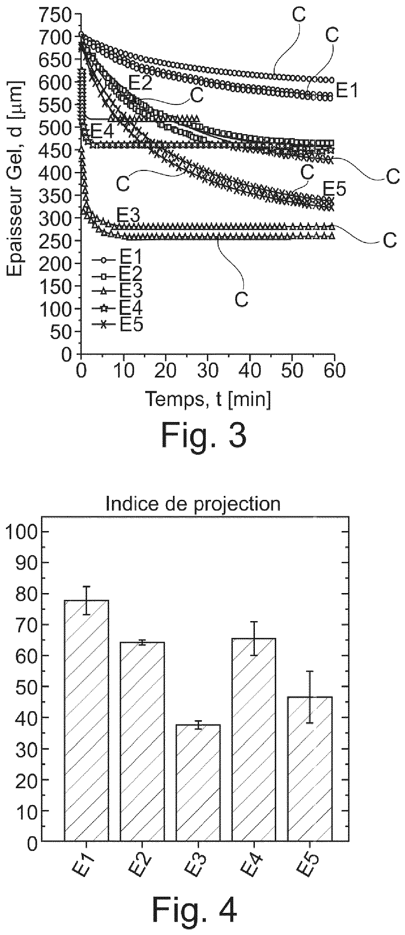

La figure 3 représente le résultat des mesures pour cinq différents gels de comblement à base d'acide hyaluronique, notés E1 à E5.

Une fois l'acquisition terminée, le procédé comprend une étape 3 au cours de laquelle on recherche les valeurs à donner aux paramètres d'un modèle mathématique de manière à avoir le meilleur ajustement du modèle avec l'évolution de l'épaisseur observée.

Dans l'exemple considéré, le modèle utilisé est celui de Maxwell généralisé, qui donne l'évolution de l'épaisseur du gel en fonction du temps t par la formule :

$$d_{gel}(t) = d_\infty + \sum A_i.e^{(-t/\tau_i)}$$

De bons résultats sont obtenus dès la présence de deux termes exponentiels :

$$d_{gel}(t) = d_\infty + A_1.e^{(-t/\tau_1)} + A_2.e^{(-t/\tau_2)}$$

Pour trouver les valeurs des paramètres $d_\infty$, $A_i$ et $\tau_i$ qui permettent d'obtenir le meilleur ajustement, on peut utiliser tout logiciel adapté à déterminer par itérations les valeurs de ces paramètres, par exemple le logiciel OriginPro®.

Dans cette simulation, $d_\infty$ correspond à l'épaisseur à l'équilibre après un temps infini, dans l'hypothèse où la force F appliquée est dans le domaine de déformation linéaire.

Pour réaliser la mise en compression et l'acquisition d'un bolus de gel, de préférence égal à 1g, on utilise par exemple un rhéomètre DHR2 (TA Instruments®) avec une plaque de pression de 40 mm de large en aluminium anodisé, avec une géométrie à plaques parallèles, à une température de 25°C.

Sur la figure 3, on a tracé les courbes C obtenues après ajustement des paramètres du modèle. On peut voir que l'on obtient une approximation assez précise de l'évolution de l'épaisseur par le modèle, avec par exemple une régression $R^2$ supérieure à 0,99.

Une fois l'ajustement des paramètres effectué, on obtient à l'étape 4 une valeur de l'épaisseur limite $d_\infty$, que l'on peut utiliser à l'étape 5 pour calculer l'indice de projection $P_{Idx} = d_\infty/d_0 * 100$

Le modèle mathématique convient le mieux aux gels pour lesquels le test est effectué dans le domaine linéaire viscoélastique LVER, mais l'invention fournit aussi des informations utiles en étant appliquée à des gels testés hors de leur domaine linéaire élastique.

Dans ce dernier cas (hors LVER), pour la simulation et le calcul de $d_\infty$, on considère un temps qui n'est pas infini mais suffisamment long, par exemple supérieur à 1 heure, de préférence supérieur à 5 heures, de préférence supérieur à 10 heures, de manière plus préférée supérieur à 30 heures, de manière encore plus préférée supérieur à 72 heures. Avantageusement, on considèrera un temps inférieur à 7 jours, de préférence inférieur à 5 jours, de manière plus préférée inférieur à 4 jours.

Le procédé peut comporter une étape de vérification que le gel de comblement est bien testé dans son domaine linéaire viscoélastique LVER.

Pour ce faire, on peut déterminer les valeurs E' et E'' en les soumettant à une analyse mécanique dynamique, avec une sollicitation mécanique oscillatoire en compression évoluant en amplitude, par exemple 0,1 à 10%, 1Hz à 25°C.

Avant la mise en place de l'étape 1, on peut alors notamment opérer à la vérification que la force F appliquée dans le procédé d'évaluation est incluse dans l'intervalle LVER du gel à évaluer et que le module E' est supérieur au module E''. Au sens de la présente invention, le domaine linéaire LVER est considéré comme la gamme de déformations allant d'une valeur initiale de module élastique E' jusqu'à la valeur du module élastique E' diminué de 10% de sa valeur initiale.

On vérifie ainsi que parmi les gels E1 à E5, les gels E3 et E4 ne sont pas sollicités dans leur domaine linéaire pour une contrainte appliquée de 2N. Cela correspond à un effondrement rapide sur la figure 3.

Des comparaisons des indices de projection des différents gels de comblement peuvent être réalisées, comme illustré sur la figure 4, afin d'en tirer une information utile pour la sélection des meilleurs gels pour une application donnée.

Par exemple, le gel E1 présente un indice de projection de 78%, c'est-à-dire qu'il est capable de maintenir 78% de son épaisseur initiale après un temps infini sous la contrainte de 2N tandis que le gel E5 est capable de maintenir 47% de son épaisseur initiale.

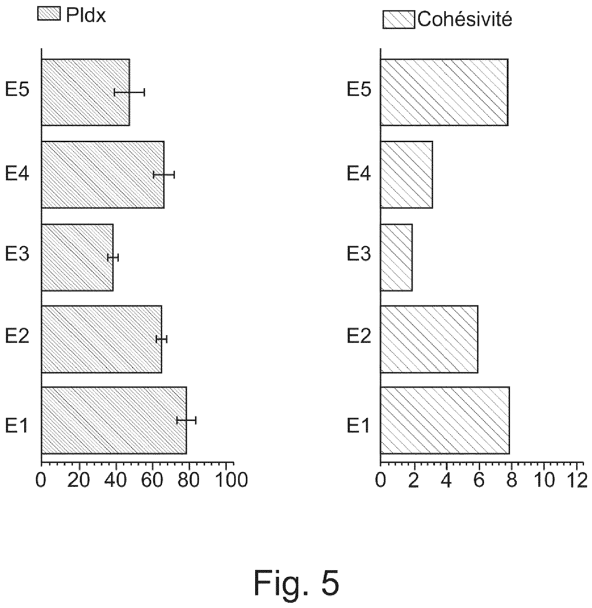

Sur la figure 5, les valeurs d'indice de projection obtenues avec l'invention de gels à base d'acide hyaluronique commerciaux dits « volumateurs » sont comparées aux valeurs de cohésivité obtenues avec le test de compression à vitesse constante de l'art antérieur de ces mêmes gels.

La légende des gels à base d'acide hyaluronique commerciaux testés aux figures 3, 4 et 5 est la suivante : E1 : RHA 4 (Teoxane), E2: Restylane Volyme (QMED), E3: Restylane Lyft (QMED), E4: Juverderm Voluma (Allergan), E5: Boletero Volume (Merz).

Les valeurs d'indice de projection exemplifiés sont mesurées à 25°C à l'aide d'un rhéomètre DHR2 équipé d'une géométrie de plaques plates parallèles (diamètre 40mm, aluminium anodisé, TA instruments®) associé au logiciel TRIOS (TA Instruments®). 1 gramme de gel est appliqué entre les plaques et l'écart entre ces plaques correspond à une épaisseur initiale ($d_{initial}$) de 700 $\mu$m. Une force de compression de 2 Newton est appliquée pendant 1 heure et l'évolution de la variation de l'épaisseur du gel est acquis. Le paramètre $d_\infty$ est calculé à l'aide du logiciel OriginPro® en le déterminant via le modèle de Maxwell généralisé

$$\mathrm{d_{gel}(t)} = d_\infty + \sum \mathrm{A_i} . \mathrm{e}^{(-t/\tau_i)}$$

où $d_\infty$ est l'épaisseur limite obtenue à l'équilibre (au bout d'un temps infini pour une force comprise dans le domaine linéaire du gel) ou au bout d'une durée prédéfinie suffisamment grande (pour une force hors du domaine linéaire), $A_i$ une constante, Ti un paramètre de relaxation, le nombre de membres i de l'équation est égal à 2.

Les valeurs d'indice de projection sont par la suite calculées comme suit :

$$P_{Idx}(\%) = \frac{d_\infty}{d_{initial}} . 100$$

La cohésivité est mesurée à une température de 25°C à l'aide d'un rhéomètre DHR2 équipé d'une géométrie de plaques plates parallèles (diamètre 40mm, aluminium anodisé, TA instruments®) associé au logiciel TRIOS (TA Instruments®). 2 grammes de gel sont déposés au centre de la plaque Peltier. L'écart initial entre les plaques est fixé à 2,60 mm puis est comprimé à une vitesse constante de 100 $\mu$m/s. La résistance mécanique du gel à la compression a été mesurée à la fin du cycle de compression, lorsque l'écart atteint 1,82 mm (70% de l'écart initial).

Le gel E5 présente une meilleure valeur de cohésivité que le gel E2 (9N vs 7N) et présente un plus faible indice de projection que E2 (47% vs 64%), et sera donc moins adapté dans sa capacité à maintenir durablement son épaisseur dans les couches de la peau et à conserver son épaisseur, y compris sous la contrainte des mouvements du visage.

L'invention permet ainsi de prédire de manière plus fiable et précise le comportement du gel *in situ* que la simple mesure de cohésivité.

Pour les gels testés dans leur domaine linéaire LVER, $P_{Idx}$ est une mesure directe de leur capacité à maintenir leur épaisseur initiale sous une contrainte de compression donnée. Pour ceux testés au-delà de leur domaine linéaire LVER, $P_{Idx}$ donne une indication sur leur capacité à garder leur épaisseur sur une certaine période ; en théorie, dans une géométrie non confinée, ces gels continueraient à fluer, mais dans la réalité, les tissus environnants apportent un certain confinement bloquant le fluage du gel et ainsi $P_{Idx}$ reste une information d'intérêt pour prédire le comportement du gel *in vivo*.

Il est possible de mettre en œuvre le procédé selon l'invention pour calculer l'indice de projection $P_{Idx}$ pour plusieurs gels candidats, et de sélectionner celui ou ceux présentant la valeur la plus élevée de $P_{Idx}$ pour des applications profondes, par exemple.

On peut aussi utiliser la mesure de $P_{Idx}$ comme aide à la formulation d'un nouveau gel, en ajustant certains paramètres de fabrication tels que le taux de réticulation molaire TR ou la quantité de polysaccharide, notamment d'acide hyaluronique, en fonction de l'impact de la modification de ces paramètres de fabrication sur la valeur de $P_{Idx}$ pour arriver de manière itérative au meilleur résultat.

Il est ainsi possible de classer les gels en fonction de la valeur $P_{Idx}$ obtenue pour chacun d'eux, voire de procéder à plusieurs évaluations à des forces respectives différentes, correspondant à des applications visées différentes, par exemple injection superficielle, médiane et/ou profonde, et à des classements de gels pour chacune de ces applications. Les gels sont par exemple classés par ordre croissant ou décroissant.

On peut fabriquer plusieurs gels candidats en une faible quantité, puis évaluer *in vitro* leur indice de projection en mettant en œuvre le procédé d'évaluation décrit plus haut, et sélectionner un gel sur la base des résultats de l'évaluation ; le gel sélectionné peut ensuite être fabriqué en une quantité supérieure, afin d'être utilisé commercialement.

On peut utiliser les résultats de mesures du paramètre $d_\infty$ pour alimenter un réseau de neurones en vue de disposer d'un outil permettant de prédire la valeur de $d_\infty$ pour différents paramètres d'entrée, et ainsi de s'affranchir une fois un nombre de données collectées suffisant, de la mesure *in vitro*.

On peut ainsi procéder à l'apprentissage supervisé d'un réseau de neurones, dans lequel on fournit en entrée lors de l'apprentissage par exemple les valeurs de concentration de polysaccharide, notamment d'acide hyaluronique, le degré de modification MoD%, le taux de réticulation molaire TR, G', G", l'angle de phase $\delta$ (tan $\delta$ = G"/G'), la largeur du domaine linéaire viscoélastique LVER, ainsi que la valeur de l'épaisseur limite $d_\infty$ pour des gels testés.

Une fois le réseau entrainé, on fournit les mêmes paramètres d'entrée, à savoir les valeurs de concentration de polysaccharide, notamment d'acide hyaluronique, le degré de modification MoD%, le taux de réticulation molaire TR, G', G", l'angle de phase $\delta$ (tan $\delta$ = G"/G'), la largeur du domaine linéaire viscoélastique LVER, et le réseau délivre en sortie une prédiction de la valeur de l'épaisseur limite $d_\infty$.

L'expression « compris entre » doit se comprendre bornes incluses, sauf si le contraire est spécifié.

## Revendications

1.  Procédé d'évaluation des performances mécaniques d'un gel de comblement, comportant les étapes consistant à :

    - 1) soumettre un bolus de ce gel présent avec une épaisseur initiale $d_0$ prédéfinie entre deux surfaces de pression à une force de compression prédéfinie F,
    - 2) acquérir l'évolution de la variation de l'épaisseur du gel ainsi comprimé au cours du temps,
    - 3) paramétrer un modèle mathématique approximant l'évolution observée à partir de l'acquisition effectuée,
    - 4) déterminer à partir du modèle une épaisseur limite $d_\infty$ vers laquelle tend à évoluer le gel au cours du temps,
    - 5) générer une information relative à la capacité du gel à maintenir son épaisseur dans les tissus, notamment un indice de projection, en comparant l'épaisseur limite $d_\infty$ à l'épaisseur initiale $d_0$.

2.  Procédé selon la revendication 1, la force F étant constante ou évoluant de manière cyclique dans le temps autour d'une valeur moyenne, la force F étant de préférence constante, la force F étant de préférence choisie entre 0,1 et 10N.

3.  Procédé selon l'une quelconque des revendications précédentes, le modèle mathématique étant choisi parmi les modèles de Maxwell, de Kelvin, de Kelvin-Voigt et de Burgers, le modèle mathématique étant de préférence le modèle de Maxwell généralisé pour les matériaux viscoélastiques, qui exprime l'épaisseur de gel en fonction du temps sous la forme :

$$d_{gel}(t) = d_\infty + \sum A_i.e^{(-t/\tau_i)}$$

où $d_\infty$ est l'épaisseur à l'équilibre, $A_i$ une constante, $\tau_i$ un paramètre de relaxation, mieux le modèle mathématique étant exprimé sous la forme :

$$d_{gel}(t) = d_\infty + A_1.e^{(-t/\tau_1)} + A_2.e^{(-t/\tau_2)}$$

4.  Procédé selon l'une quelconque des revendications précédentes, dans lequel on calcule un paramètre, dit indice de projection $P_{Idx}$, exprimé en %, défini par le ratio $d_\infty/d_0$ * 100.

5.  Procédé selon l'une quelconque des revendications précédentes, dans lequel l'épaisseur initiale $d_0$ est choisie entre 500 et 1000 microns, de préférence entre 600 et 900 microns, mieux entre 600 et 800 microns, étant notamment égale à 700 microns, et/ou la quantité de gel étant choisie entre 0,1 et 10 g, mieux entre 0,5 et 5g, encore mieux 0,5 et 2g, étant notamment égale à 1g.

**6.** Procédé selon l'une quelconque des revendications précédentes, dans lequel on effectue au moins deux évaluations à des forces respectives F différentes selon l'application visée pour les gels, notamment soit à une force F comprise entre 1 et 5N, de préférence entre 2 et 4N, soit à une force F comprise entre 0,5 et 2N, de préférence entre 0,5 et 1N, soit à une force comprise entre 1 et 4N, de préférence entre 1 et 2N.

**7.** Procédé selon l'une quelconque des revendications précédentes, comportant l'étape consistant à déterminer si la compression a lieu dans le domaine de déformation viscoélastique linéaire du gel (Linear ViscoElastic Region ou LVER), de préférence l'étape consistant à déterminer si la compression a lieu dans le domaine de déformation viscoélastique linéaire du gel étant effectuée en soumettant le gel à un balayage de contraintes oscillatoires en compression, couvrant de préférence l'intervalle (0,1 à 10%, 1Hz, à 25°C), et mieux comportant l'émission d'une information d'alerte lorsque la force F n'est pas dans le domaine de déformation viscoélastique linéaire et/ou que E' <E", E' désignant le module d'élasticité et E" le module de perte.

**8.** Procédé de classement d'un ensemble de gels de comblement en fonction de leur performance mécanique, dans lequel on met pour chacun de ces gels en œuvre le procédé d'évaluation selon l'une quelconque des revendications précédentes, et l'on classe les gels en fonction du résultat des mesures, notamment de valeurs d'indice de projection obtenues.

**9.** Procédé selon l'une quelconque des revendications précédentes, étant mis en œuvre à l'aide d'un banc de test comportant un automate disposant d'un processeur programmé pour effectuer le pilotage de la force F et mesurer la distance au cours du temps entre les surfaces d'appui, ainsi que pour paramétrer le modèle, calculer l'épaisseur limite, et délivrer l'information relative à la capacité du gel à maintenir son épaisseur.

**10.** Procédé selon l'une quelconque des revendications précédentes, l'indice de projection étant imprimé ou affiché sur un support d'information, notamment une notice, un emballage du gel, un panneau d'information ou publicitaire, une brochure commerciale ou médicale, un écran de télévision, d'ordinateur ou de téléphone portable, ou sur un écran d'automate.

**11.** Procédé selon l'une quelconque des revendications précédentes, le gel de comblement étant un gel à base d'acide hyaluronique et/ou de ses sels.

**12.** Procédé selon l'une quelconque des revendications précédentes, la force F étant appliquée entre une plaque fixe et une plaque mobile qui est déplacée vers la plaque fixe, cette plaque mobile appliquant de préférence une force F fixe.

**13.** Procédé de sélection d'un gel de comblement dans lequel on met en œuvre le procédé d'évaluation selon l'une quelconque des revendications 1 à 7 pour un ensemble de gels de comblement à tester, et l'on sélectionne le gel en fonction au moins des résultats de l'évaluation, notamment de valeurs d'indice de projection, une valeur d'indice de projection étant de préférence utilisée pour discriminer des gels dont les résultats au test de compression sont proches.

**14.** Procédé de fabrication d'un gel de comblement, dans lequel un gel candidat est fabriqué en une faible quantité, puis son indice de projection est évalué en mettant en œuvre le procédé d'évaluation selon l'une quelconque des revendications 1 à 7, et l'on fabrique le gel en quantité supérieure à celle du gel candidat, au moins si l'indice de projection dépasse un seuil prédéfini.

**15.** Procédé de fabrication d'un gel de comblement, dans lequel plusieurs gels candidats sont fabriqués en une faible quantité, puis leur indice de projection est évalué en mettant en œuvre le procédé d'évaluation selon l'une quelconque des revendications 1 à 7, l'on sélectionne un gel sur la base des résultats de l'évaluation, et l'on fabrique le gel sélectionné en quantité supérieure à celle du gel candidat.

**16.** Procédé d'apprentissage supervisé d'un réseau de neurones, dans lequel on fournit en entrée les valeurs de concentration de polysaccharide, notamment d'acide hyaluronique, le degré de modification MoD%, le taux de réticulation molaire TR, G', G", l'angle de phase $\delta$ (tan $\delta$ = G"/G'), la largeur du domaine linéaire viscoélastique LVER, ainsi que la valeur de l'épaisseur limite $d_\infty$ pour des gels testés par la mise en œuvre du procédé d'évaluation selon l'une quelconque des revendications 1 à 7, et l'on apprend le réseau à délivrer en sortie la valeur de l'épaisseur limite $d_\infty$.

**Patentansprüche**

1. Verfahren zur Untersuchung der mechanischen Leistungen eines Auffüllungsgels, umfassend die folgenden Schritte:

   - 1) Unterziehen eines Bolus dieses Gels mit einer festgelegten Anfangsdicke $d_0$ zwischen zwei Druckflächen einer festgelegten Kompressionskraft F,
   - 2) Aufzeichnen des Verlaufs der Veränderung der Dicke des so komprimierten Gels mit der Zeit,
   - 3) Parametrieren eines mathematischen Modells, das den beobachteten Verlauf aus der durchgeführten Aufzeichnung approximiert,
   - 4) Bestimmen einer Grenzdicke d aus dem Modell, zu der hin sich das Gel mit der Zeit tendenziell verändert,
   - 5) Generieren einer Information hinsichtlich der Fähigkeit des Gels, seine Dicke in Geweben beizubehalten, insbesondere einen Projektionsindex, durch Vergleichen der Grenzdicke d mit der Anfangsdicke $d_0$.

2. Verfahren nach Anspruch 1, wobei die Kraft F konstant ist oder sich zyklisch mit der Zeit um einen Mittelwert verändert, wobei die Kraft F vorzugsweise konstant ist, wobei die Kraft F vorzugsweise zwischen 0,1 und 10 N gewählt wird.

3. Verfahren nach einem der vorhergehenden Ansprüche, wobei das mathematische Modell aus dem Maxwell-, dem Kelvin-, dem Kelvin-Voigt- und dem Burgers-Modell ausgewählt wird, wobei das mathematische Modell vorzugsweise das für viskoelastische Materialien verallgemeinerte Maxwell-Modell ist, das die Geldicke als Funktion der Zeit folgendermaßen ausdrückt:

$$d_{Gel}(t) = d + \sum A_i.e^{(-t/\tau i)}$$

   wobei d die Dicke im Gleichgewicht ist, $A_i$ eine Konstante ist, $\tau_i$ ein Relaxationsparameter ist, wobei noch besser das mathematische Modell folgendermaßen ausgedrückt wird:

$$d_{Gel}(t) = d + A_1.e^{(-t/\tau 1)} + A_2.e^{(-t/\tau 2)}$$

4. Verfahren nach einem der vorhergehenden Ansprüche, wobei man einen als Projektionsindex $P_{Idx}$, ausgedrückt in %, bezeichneten Parameter berechnet, der durch das Verhältnis

$$d/d_0 * 100 \text{ definiert ist.}$$

5. Verfahren nach einem der vorhergehenden Ansprüche, wobei die Anfangsdicke $d_0$ zwischen 500 und 1000 Mikrometer, vorzugsweise zwischen 600 und 900 Mikrometer, noch besser zwischen 600 und 800 Mikrometer gewählt wird, wobei sie insbesondere gleich 700 Mikrometer ist, und/oder die Menge an Gel zwischen 0,1 und 10 g, besser zwischen 0,5 und 5 g, noch besser 0,5 und 2 g gewählt wird, wobei sie insbesondere gleich 1 g ist.

6. Verfahren nach einem der vorhergehenden Ansprüche, wobei man mindestens zwei Untersuchungen bei jeweils unterschiedlichen Kräften F je nach der für die Gele vorgesehenen Anwendung durchführt, insbesondere entweder bei einer Kraft F zwischen 1 und 5 N, vorzugsweise zwischen 2 und 4 N, oder bei einer Kraft F zwischen 0,5 und 2 N, vorzugsweise zwischen 0,5 und 1 N, oder bei einer Kraft zwischen 1 und 4 N, vorzugsweise zwischen 1 und 2 N.

7. Verfahren nach einem der vorhergehenden Ansprüche, umfassend den Schritt der Bestimmung, ob die Kompression innerhalb des linearen viskoelastischen Verformungsbereichs (Linear ViscoElastic Region oder LVER) des Gels erfolgt, wobei vorzugsweise der Schritt der Bestimmung, ob die Kompression innerhalb des linearen viskoelastischen Verformungsbereichs des Gels erfolgt, durchgeführt wird, indem das Gel einer dynamischmechanischen Analyse unter Druck unterzogen wird, die vorzugsweise das Intervall (0,1 bis 10 %, 1 Hz, bei 25 °C) abdeckt, und noch besser umfassend die Ausgabe einer Alarminformation, wenn die Kraft F nicht im linearen viskoelastischen Verformungsbereich liegt und/oder dass E'<E", wobei E' für das Elastizitätsmodul und E" für das Verlustmodul steht.

8. Verfahren zur Klassifizierung einer Reihe von Auffüllungsgelen in Abhängigkeit von ihrer mechanischen Leistung, wobei man für jedes dieser Gele das Untersuchungsverfahren nach einem der vorhergehenden Ansprüche durchführt und die Gele in Abhängigkeit vom Ergebnis der Messungen, insbesondere von den erhaltenen Projektionsindexwerten, klassifiziert.

9. Verfahren nach einem der vorhergehenden Ansprüche, das mithilfe eines Prüfstands durchgeführt wird, der einen Automaten mit einem Prozessor umfasst, der dafür programmiert ist, die Steuerung der Kraft F durchzuführen und den Abstand zwischen den Kontaktflächen im Zeitverlauf zu messen sowie das Modell zu parametrieren, die Grenzdicke zu berechnen und die Information in Bezug auf die Fähigkeit des Gels, seine Dicke beizubehalten, zu liefern.

10. Verfahren nach einem der vorhergehenden Ansprüche, wobei der Projektionsindex auf einem Informationsträger, insbesondere einer Packungsbeilage, einer Verpackung des Gels, einer Informations- oder Werbetafel, einer Verkaufs- oder medizinischen Broschüre, einem Fernseh-, Computer- oder Mobiltelefonbildschirm oder auf einem Roboterbildschirm, aufgedruckt ist oder angezeigt wird.

11. Verfahren nach einem der vorhergehenden Ansprüche, wobei das Auffüllungsgel ein Gel auf Basis von Hyaluronsäure und/oder deren Salzen ist.

12. Verfahren nach einem der vorhergehenden Ansprüche, wobei die Kraft F zwischen einer festen Platte und einer beweglichen Platte angewendet wird, die in Richtung zu der festen Platte verschoben wird, wobei diese bewegliche Platte vorzugsweise eine feste Kraft F anwendet.

13. Verfahren zur Auswahl eines Auffüllungsgels, wobei man das Untersuchungsverfahren nach einem der Ansprüche 1 bis 7 auf eine Reihe von zu prüfenden Auffüllungsgelen anwendet und das Gel in Abhängigkeit von zumindest den Ergebnissen der Untersuchung, insbesondere von Projektionsindexwerten, auswählt, wobei ein Projektionsindexwert vorzugsweise dazu verwendet wird, Gele zu unterscheiden, deren Ergebnisse beim Kompressionstest ähnlich sind.

14. Verfahren zur Herstellung eines Auffüllungsgels, wobei ein Kandidatengel in einer kleinen Menge hergestellt wird und dann dessen Projektionsindex mittels Durchführung des Untersuchungsverfahrens nach einem der Ansprüche 1 bis 7 untersucht wird und man das Gel, zumindest wenn der Projektionsindex einen festgelegten Schwellenwert überschreitet, in einer größeren Menge als diejenige des Kandidatengels herstellt.

15. Verfahren zur Herstellung eines Auffüllungsgels, wobei mehrere Kandidatengele in einer kleinen Menge hergestellt werden und dann deren Projektionsindex mittels Durchführung des Untersuchungsverfahrens nach einem der Ansprüche 1 bis 7 untersucht wird, man auf der Basis der Ergebnisse der Untersuchung ein Gel auswählt und das ausgewählte Gel in einer größeren Menge als diejenige des Kandidatengels herstellt.

16. Verfahren für das überwachte Lernen eines neuronalen Netzes, wobei man als Eingabe die Werte der Konzentration von Polysaccharid, insbesondere von Hyaluronsäure, den Modifikationsgrad MoD%, das molare Vernetzungsverhältnis TR, G', G", den Phasenwinkel $\delta$ (tan $\delta$ = G"/G'), die Breite des linearen viskoelastischen Bereichs LVER sowie den Wert der Grenzdicke d für Gele bereitstellt, die mittels Durchführung des Untersuchungsverfahrens nach einem der Ansprüche 1 bis 7 getestet wurden, und dem Netz beibringt, als Ausgabe den Wert der Grenzdicke d zu liefern.

**Claims**

1. Method for evaluating the mechanical performances of a filler gel, comprising the steps consisting in:

   - 1) subjecting a bolus of this gel, present with a predefined initial thickness $d_0$ between two pressure surfaces, to a predefined compressive force F,
   - 2) capturing the change in the variation of the thickness of the gel thus compressed over time,
   - 3) parameterizing a mathematical model approximating the observed change on the basis of the capture performed,
   - 4) determining, from the model, a limiting thickness d toward which the gel tends to change over time,
   - 5) generating information relating to the ability of the gel to maintain its thickness in the tissues, in particular a projection index, by comparing the limiting thickness d to the initial thickness $d_0$.

2. Method according to Claim 1, in which the force F is constant or changes cyclically over time around an average value, the force F preferably being constant, the force F preferably being selected between 0.1 and 10 N.

3. Method according to either of the preceding claims, the mathematical model being selected from Maxwell, Kelvin, Kelvin-Voigt and Burgers models, the mathematical model preferably being the generalized Maxwell model for viscoelastic materials, which expresses gel thickness as a function of time in the form:

$$d_{gel}(t) = d + \sum A_i.e^{(-t/\tau i)}$$

where d is the thickness at equilibrium, $A_i$ a constant, $\tau_i$ a relaxation parameter, better still the mathematical model being expressed in the form:

$$d_{gel}(t) = d + A_1.e^{(-t/\tau 1)} + A_2.e^{(-t/\tau 2)}$$

4. Method according to any one of the preceding claims, in which a parameter, referred to as the projection index $P_{Idx}$, expressed in %, defined by the following ratio is calculated

$$d/d_0 * 100.$$

5. Method according to any one of the preceding claims, in which the initial thickness $d_0$ is selected between 500 and 1000 microns, preferably between 600 and 900 microns, better still between 600 and 800 microns, being in particular equal to 700 microns, and/or the amount of gel being selected between 0.1 and 10 g, better still between 0.5 and 5 g, even better still between 0.5 and 2 g, being in particular equal to 1 g.

6. Method according to any one of the preceding claims, in which at least two evaluations are carried out at different respective forces F depending on the intended application for the gels, in particular either at a force F of between 1 and 5 N, preferably between 2 and 4 N, or at a force F of between 0.5 and 2 N, preferably between 0.5 and 1 N, or at a force of between 1 and 4 N, preferably between 1 and 2 N.

7. Method according to any one of the preceding claims, comprising the step consisting in determining whether the compression takes place in the linear viscoelastic deformation region (LVER) of the gel; preferably, the step consisting in determining whether the compression takes place in the linear viscoelastic deformation region of the gel being carried out by subjecting the gel to a sweep of compressive oscillatory stresses, preferably covering the range (0.1 to 10%, 1 Hz, at 25°C), and better still comprising the emission of warning information when the force F is not in the linear viscoelastic deformation region and/or when E'<E", E' denoting the modulus of elasticity and E" the loss modulus.

8. Method for classifying a set of filler gels according to their mechanical performance, in which the evaluation method according to any one of the preceding claims is carried out for each of these gels, and the gels are classified according to the result of the measurements, in particular according to projection index values obtained.

9. Method according to any one of the preceding claims, which is carried out using a test bench comprising an automated device having a processor programmed to control the force F and to measure the distance over time between the contact surfaces, and also to parameterize the model, calculate the limiting thickness, and deliver the information relating to the capacity of the gel to retain its thickness.

10. Method according to any one of the preceding claims, in which the projection index is printed or displayed on an information medium, in particular a notice, packaging of the gel, an information or advertising panel, a commercial or medical brochure, a television screen, a laptop computer screen or a mobile telephone screen, or on a screen of an automated device.

11. Method according to any one of the preceding claims, in which the filler gel is a gel based on a hyaluronic acid and/or salts thereof.

12. Method according to any one of the preceding claims, in which the force F is applied between a fixed plate and a movable plate which is moved towards the fixed plate, this movable plate preferably applying a fixed force F.

13. Method for selecting a filler gel, in which the evaluation method according to any one of Claims 1 to 7 for a set of filler gels to be tested is carried out, and the gel is selected according to at least the results of the evaluation, in particular projection index values, a projection index value preferably being used to distinguish between gels for which the compression test results are close.

14. Method for manufacturing a filler gel, in which a candidate gel is manufactured in a small amount, and its projection index is then evaluated by carrying out the evaluation method according to any one of Claims 1 to 7, and the gel is manufactured in an amount greater than that of the candidate gel, at least if the projection index exceeds a predefined threshold.

15. Method for manufacturing a filler gel, in which several candidate gels are manufactured in a small amount, and their projection index is then evaluated by carrying out the evaluation method according to any one of Claims 1 to 7, a gel is selected on the basis of the evaluation results, and the selected gel is manufactured in an amount greater than that of the candidate gel.

16. Method for supervised learning of a neural network, in which the polysaccharide concentration values, in particular the hyaluronic acid concentration values, the degree of modification MoD%, the degree of molar crosslinking DC, G', G", the phase angle $\delta$ (tan $\delta$ = G"/G'), the width of the linear viscoelastic region LVER and also the value of the limiting thickness d are provided as input for gels tested by carrying out the evaluation method according to any one of Claims 1 to 7, and the network is trained to deliver as output the value of the limiting thickness d .

Fig. 1

Fig. 2

Fig. 3

Indice de projection

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JIMMY FAIVRE et al.** Advanced Concepts in Rheology for the Evaluation of Hyaluronic Acid-Based Soft Tissue Fillers. *DERMATOLOGIC SURGERY*, 22 February 2021, vol. 47 (5), e159-e167

- *Original Article - Supplemental Digital Content Advanced Concepts in Rheology for the Evaluation of Hyaluronic Acid-based Soft Tissue Fillers*, 1-5